# EUROPÄISCHE PATENTANMELDUNG

(11) **EP 4 703 274 A2**
(43) Veröffentlichungstag der Anmeldung: **04.03.2026**
(21) Anmeldenummer: 25199242.6
(22) Anmeldetag: 01.09.2025
(51) Int. Cl.: B65B 3/02, B08B 3/02, B65B 55/02

(54) **BEHÄLTERBEHANDLUNGSANLAGE UND VERFAHREN ZUM BETRIEB EINER BEHÄLTERBEHANDLUNGSANLAGE**

(30) Priorität: 02.09.2024 DE 102024125019
(71) Anmelder: KHS GmbH, 44143 Dortmund (DE)
(72) Erfinder: Herold, Thomas, 44143 Dortmund (DE); Gerhards, Martin, 44143 Dortmund (DE); Klatt, Dieter, 44143 Dortmund (DE)
(74) Vertreter: Andrejewski - Honke Patent- und Rechtsanwälte Partnerschaft mbB

(57) **Zusammenfassung**

Die Erfindung betrifft eine Behälterbehandlungsanlage, insbesondere Fluidumformmaschine zur Bildung von Kunststoffflaschen (3), mit einer Vielzahl von Behälterbehandlungsstationen (5), mit einer umlaufend antreibbaren Traganordnung (4), an der die Behälterbehandlungsstationen (5) gehalten sind und welche mit einem Fußabschnitt (9) auf einer Bodenfläche (10) abgestützt ist, und mit einer sich in Richtung der Bodenfläche (10) zumindest bis zu der Höhe des Fußabschnitts (9) erstreckenden Umhausung (6), welche die Traganordnung (4) mit den daran gehaltenen Behandlungsstationen (5) aufnimmt. Erfindungsgemäß ist vorgesehen, dass zumindest eine erste Sprüheinrichtung (7) zum Austrag einer Reinigungsflüssigkeit mit der Traganordnung (4) umlaufend bewegbar zur Reinigung einer Innenseite der Umhausung (6) angeordnet ist. Gegenstand der Erfindung ist auch ein Verfahren zum Betrieb der Behälterbehandlungsanlage.

## Beschreibung

Die Erfindung betrifft eine Behälterbehandlungsanlage, insbesondere eine Fluidumformmaschine zur Bildung von Kunststoffflaschen, mit einer Vielzahl von Behälterbehandlungsstationen, mit einer umlaufend antreibbaren Traganordnung, an der die Behälterbehandlungsstationen gehalten sind und welche mit einem Fußabschnitt auf einer Bodenfläche abgestützt ist, und mit einer sich in Richtung der Bodenfläche zumindest bis zu der Höhe des Fußabschnitts erstreckenden Umhausung, welche die Traganordnung mit den daran gehaltenen Behandlungsstationen aufnimmt. Die Erfindung beschäftigt sich des Weiteren mit dem Betrieb einer solchen Behälterbehandlungsanlage.

Die vorliegende Erfindung bezieht sich insbesondere auf den Bereich der Getränkeindustrie, wobei die Behälterbehandlungsanlage dann Getränkebehälter handhabt. Die Behälterbehandlungsanlage kann aber auch zur Bildung von Behältern und insbesondere Flaschen vorgesehen sein, welche ein anderes Füllgut aufnehmen. Als Füllgut können beispielsweise auch flüssige oder pastöse Lebensmittel wie Ketchup und Mayonnaise, Reinigungsmittel, Kosmetikprodukte oder dergleichen vorgesehen sein.

Der Begriff Behälterbehandlungsanlage bezieht sich im Rahmen der vorliegenden Erfindung nicht nur auf eine Handhabung und Modifikation von Behältern, sondern umfasst auch deren Ausformung, Umformung, ein Befüllen, ein Verschließen, ein Etikettieren oder dergleichen. Exemplarisch kann die Behälterbehandlungsanlage eine Streckblasmaschine, eine Form-Füll-Maschine oder eine herkömmliche Getränke-Füllmaschine sein, der bereits ausgeformte Behälter zugeführt werden.

Besonders vorteilhaft ist die vorliegende Erfindung im Zusammenhang mit einer Form-Füll-Maschine als Behälterbehandlungsanlage, bei der spezifische Anforderungen zu berücksichtigen sind.

Bei dem Form-Füll-Prozess werden Vorformlinge zu den Behälterbehandlungsstationen zugeführt und darin mit einem Füllgut als Fluid zu Flaschen umgeformt, wobei dann die ausgeformten, befüllten Flaschen aus den Behälterbehandlungsstationen wieder entnommen werden. Da die Vorformlinge direkt mit dem Füllgut umgeformt werden, entfällt ein separater, nachgelagerter Füllprozess.

Zu beachten ist jedoch, dass bei dem Füllprozess an den Komponenten verbleibende Reste des Füllgutes zu Verunreinigungen führen können. Insbesondere auch durch die Bewegung der Traganordnung, beispielsweise in Form eines Karussells, können entsprechende Verunreinigungen auch verteilt werden, sodass für einen hygienischen Betrieb eine regelmäßige Reinigung vorgesehen ist.

Dabei ist es bekannt, entsprechende Behälterbehandlungsanlagen mit einer Umhausung zu versehen. Eine solche Umhausung dient zum Schutz der Behälterbehandlungsanlage und einer gewissen Trennung von der Umgebung. Die Umhausung ist dabei der jeweiligen Behälterbehandlungsanlage zugeordnet, wobei die Umhausung in der Regel einen Eingabebereich und einen Ausgabebereich für die behandelten Behälter oder gegebenenfalls auch deren Vorprodukte aufweist. Bei der bevorzugten Ausgestaltung der Behälterbehandlungsanlage als Form-Füll-Maschine werden beispielsweise an dem Eingabebereich Vorformlinge zugeführt und an dem Ausgabebereich ausgeformte, befüllte Behälter abgeführt.

Im Rahmen der Erfindung wird zwischen einer Reinigung und einer Sterilisation unterschieden. Als Reinigung wird in diesem Zusammenhang insbesondere die Entfernung von Verschmutzungen und Verunreinigungen durch ein Spülen, Abwaschen, Abwischen oder dergleichen verstanden. Bei Behälterbehandlungsanlagen kann eine Reinigung manuell oder automatisch mit einer Reinigungsflüssigkeit erfolgen.

Bei einer Sterilisation von Behälterbehandlungsanlagen ist es das Ziel, Mikroorganismen, Sporen und Viren in einem erheblichen Maße abzutöten bzw. zu zerstören. Insbesondere kann dabei mit einem geeigneten Sterilisationsmittel eine Sterilisation erfolgen, welche den Anteil an Keimen und Bakterien auf ein vorgegebenes Maß, beispielsweise um 4 bis 5 Zehnerpotenzen, reduziert.

Bei einer Sterilisation steht somit die Deaktivierung von Mikroorganismen, Sporen und Viren im Vordergrund, wobei anders als bei einer Reinigung die Entfernung der deaktivierten Bestandteile von untergeordneter Bedeutung ist.

Vor diesem Hintergrund erfolgt die Sterilisation in der Praxis häufig trocken oder im Wesentlichen trocken. Ein Sterilisationsmittel kann beispielsweise gasförmig eingebracht werden. Auch ist es möglich, ein Sterilisationsmittel zu vernebeln oder aufzusprühen, wobei dann das Sterilisationsmittel in der Regel verdampft oder verdunstet und somit mit der umgebenden Luft abgeführt werden kann.

Im Rahmen der vorliegenden Erfindung ist dagegen eine Reinigung vorgesehen, wobei Verschmutzungen mit einer Reinigungsflüssigkeit abgeführt werden. Eine Sterilisation kann dabei optional vorgesehen sein, wobei entweder eine Reinigungsflüssigkeit mit einer gewissen sterilisierenden Wirkung eingesetzt wird oder aber auch zusätzlich oder alternativ ein separater Sterilisationsschritt vorgesehen ist.

Gerade bei der bevorzugten Ausgestaltung der Behälterbehandlungsanlage als Form-Füll-Maschine können vergleichsweise großer Mengen an Füllgut austreten und insbesondere in der Umhausung verteilt werden. Es besteht dann die Notwendigkeit, entsprechende Verunreinigungen tatsächlich abzuführen und nicht nur in einem gewissen Maße zu neutralisieren.

Aus der DE 10 2011 102 090 B4 ist eine Behälterbehandlungsanlage in der Ausgestaltung einer Form-Füll-Maschine bekannt, wobei für die Reinigung und/oder Desinfektion von Form- und Füllstellen als Behälterbehandlungsstationen ein Reinigungs- und/oder Desinfektionskopf vorgesehen ist, der genau eine Behälterbehandlungsstation aufnehmen kann. Der Reinigungs- und/oder Desinfektionskopf kann dabei ein flüssiges Reinigungs- und/oder Desinfektionsmittel durch Düsen auf die aufgenommene Behälterbehandlungsstation sprühen, wobei die entsprechende Reinigungs- und/oder Desinfektionsflüssigkeit direkt mit dem Reinigungs- und/oder Desinfektionskopf wieder aufgenommen werden kann. Die an der Traganordnung in Form eines Karussells angeordneten Behälterbehandlungsstationen können dann nacheinander in der beschriebenen Weise gereinigt werden. Die Reinigung ist somit vergleichsweise aufwendig und langwierig.

Aus der DE 10 2009 036 920 A1 ist es bekannt, die Behälterbehandlungsstation einer Behälterbehandlungsanlage an einer Sprüheinrichtung vorbeizuführen.

Der vorliegenden Erfindung liegt die Aufgabe zugrunde, eine Behälterbehandlungsanlage anzugeben, die auf vergleichsweise einfache Weise hygienisch betrieben und zu diesem Zwecke gereinigt werden kann. Des Weiteren soll auch ein Verfahren zum Betrieb einer solchen Behälterbehandlungsanlage angegeben werden.

Gegenstand der Erfindung und Lösung der Aufgabe sind eine Behälterbehandlungsanlage gemäß Patentanspruch 1 sowie ein Verfahren zum Betrieb einer Behälterbehandlungsanlage gemäß Patentanspruch 11.

Ausgehend von einer Behälterbehandlungsanlage gemäß dem Oberbegriff des Patentanspruches 1 ist somit vorgesehen, dass zumindest eine erste Sprüheinrichtung zum Austrag einer Reinigungsflüssigkeit mit der Traganordnung umlaufend bewegbar zur Reinigung einer Innenseite der Umhausung angeordnet ist. Wie auch nachfolgend beschrieben, erfolgt die Reinigung vorzugsweise in einem von dem Produktionsbetrieb separaten Reinigungsbetrieb, wobei dabei auch die Traganordnung umlaufend bewegt wird.

Bei der Traganordnung kann es sich beispielsweise um ein Karussell mit einer vertikalen Rotationsachse handelt. Die zumindest eine erste Sprüheinrichtung wird dann auf einer Kreisbahn geführt, sodass um den gesamten Umfang eine Reinigung der Innenseite der Umhausung erfolgen kann.

Entsprechende Überlegungen gelten auch, wenn die Traganordnung in einer anderen Weise umlaufend ist, beispielsweise bei einer Ausgestaltung als Kette oder dergleichen, wobei dann auch eine von der Kreisbahn abweichende Kurve abgefahren werden kann.

Durch die umlaufende Anordnung der zumindest einen ersten Sprüheinrichtung ist es möglich, mit einer einzigen ersten Sprüheinrichtung die Innenseite der Umhausung um den gesamten Umfang sukzessive zu reinigen.

Selbstverständlich können im Rahmen der Erfindung aber auch zwei oder mehr erste Sprüheinrichtungen angeordnet sein, welche insbesondere an verschiedenen Winkelpositionen der Traganordnung bei einer Ausgestaltung als Karussell angeordnet sein können. Gleichzeitig erfolgt dann eine Reinigung an zumindest zwei Stellen, wodurch die Reinigungsleistung verbessert und/oder die Reinigungsdauer verkürzt werden kann.

Zusätzlich oder alternativ ist es auch möglich, dass mit mehreren ersten Sprüheinrichtungen auch unterschiedliche Bereiche, beispielsweise unterschiedliche Höhen der Innenseite der Umhausung, überstrichen werden. Auch dadurch ist eine besonders zuverlässige und vollständige Reinigung möglich.

Erfindungsgemäß erstreckt sich die Umhausung zumindest bis zu der Höhe des Fußabschnitts der Traganordnung. Besonders bevorzugt erstreckt sich die Umhausung unmittelbar bis zu der Bodenfläche, auf der auch die Traganordnung mit ihrem Fußabschnitt aufsteht. Die Umhausung bildet dann einen zumindest im Wesentlichen abgeschlossenen Raum, wobei auch bei der Reinigung der Austritt von Reinigungsflüssigkeit in die Umgebung vermieden werden kann.

Im Rahmen der Erfindung ist die zumindest eine erste Sprüheinrichtung zum Austrag einer Reinigungsflüssigkeit vorgesehen. Gemäß der zuvor dargelegten Unterscheidung zwischen einer Reinigung und einer Sterilisation werden folglich Verschmutzungen mit der Reinigungsflüssigkeit gelöst oder zumindest weggespült, sodass die dann mit entsprechenden Verschmutzungen beladene Reinigungsflüssigkeit in geeigneter Weise abzuführen ist.

Vor diesem Hintergrund ist gemäß einer bevorzugten Ausgestaltung der Erfindung vorgesehen, die Reinigungsflüssigkeit bodenseitig zu sammeln und/oder abzuführen.

Zur Abführung der Reinigungsflüssigkeit kann an der Bodenfläche beispielsweise ein Bodenablauf vorgesehen sein.

Zusätzlich oder alternativ kann eine Auffangwanne vorgesehen sein, die Reinigungsflüssigkeit aufnimmt. Bei einer Kombination der beschriebenen Maßnahmen kann dann die Auffangwanne beispielsweise in den zuvor beschriebenen Bodenablauf münden. Mit einer Auffangwanne ist aber auch eine andersartige Abführung der Flüssigkeit, beispielsweise über einen Abwasserschlauch oder dergleichen möglich. Grundsätzlich kommt auch in Betracht, verschmutzte Reinigungsflüssigkeit aus der Auffangwanne abzupumpen bzw. abzusaugen.

Geeignete Reinigungsflüssigkeiten sind dem Fachmann bekannt und können insbesondere Tenside, Lösemittel sowie Enzyme enthalten.

Ausgehend von der zuvor erläuterten Unterscheidung zwischen einer Reinigung und einer Sterilisation kann im Rahmen der Erfindung optional auch eine gewisse Sterilisation erfolgen. Dazu kann eine Reinigungsflüssigkeit eingesetzt werden, welche durch entsprechende Zugaben auch eine sterilisierende Wirkung hat. Zusätzlich oder alternativ kann eine Sterilisation auch in einem separaten Sterilisationsschritt erfolgen, wozu gegebenenfalls auch die zumindest eine erste Sprüheinrichtung dann für den Austrag eines Sterilisationsmittels genutzt werden kann. Beispielsweise kann Peressigsäure (Peroxyessigsäure) als Sterilisationsmittel und/oder als zugegebener Bestandteil der Reinigungsflüssigkeit vorgesehen sein.

Gemäß einer bevorzugten Ausgestaltung der Erfindung ist vorgesehen, dass innerhalb der Umhausung zumindest eine zweite Sprüheinrichtung zur Reinigung der daran vorbei bewegbaren Behälterbehandlungsstationen und der Traganordnung bis zu ihrem Fußabschnitt vorgesehen. In dem Reinigungsbetrieb kann dann die Innenseite der Umhausung von der zumindest einen ersten Sprüheinrichtung gereinigt werden, während gleichzeitig insbesondere durch die umlaufende Bewegung der Traganordnung durch die zumindest eine zweite Sprüheinrichtung auch die daran vorbei geführten Behälterbehandlungsstationen sowie die Traganordnung gereinigt werden können.

Auch dabei ist es grundsätzlich ausreichend, wenn lediglich eine zweite Sprüheinrichtung vorgesehen ist, welche innerhalb der Umhausung ortsfest oder in einem begrenzten Bereich beweglich ist. Eine Reinigung sämtlicher Behälterbehandlungsstationen ist dann nämlich dadurch möglich, dass diese mit der Traganordnung aktiv an der zumindest einen zweiten Sprüheinrichtung vorbeigeführt werden.

Für eine schnelle und/oder gründlichere Reinigung oder auch die Reinigung verschiedener Abschnitte können auch mehrere zweite Sprüheinrichtungen, insbesondere an verschiedenen Umfangpositionen und/oder in verschiedenen Höhen und/oder mit unterschiedlicher Sprührichtung innerhalb der Umhausung angeordnet sein.

Hinsichtlich der konkreten Ausgestaltung der zumindest einen ersten Sprüheinrichtung sowie der zumindest einen zweiten Sprüheinrichtung ergeben sich vielfältige Möglichkeiten.

Beispielsweise ist es möglich, dass die zumindest eine erste und/oder die zumindest eine zweite Sprüheinrichtung eine Zuführleitung und eine gegenüber der Zuführleitung bewegliche Düsenanordnung aufweist. Bewegliche Düsen- oder Sprühköpfe können dabei in bekannter Weise durch den Wasserdruck angetrieben werden. Entsprechende Düsen sind dem Fachmann beispielsweise auch von Hochdruckreinigen oder dergleichen bekannt.

Des Weiteren ist es möglich, dass die zumindest eine erste oder zweite Sprüheinrichtung mehrere voneinander beabstandete Austrittsöffnungen aufweist, um eine Art Düsenbaum oder eine Fächerdüse zu bilden.

Es versteht sich, dass im Rahmen der Erfindung grundsätzlich zueinander unterschiedliche erste Sprüheinrichtungen und/oder zueinander unterschiedliche zweite Sprüheinrichtungen kombiniert werden können. Häufig wird es unter Berücksichtigung des jeweiligen Anwendungszwecks auch sinnvoll sein, die zumindest eine erste Sprüheinrichtung und die zumindest eine zweite Sprüheinrichtung unterschiedlich zu gestalten.

Geeignete Konfigurationen können durch theoretische Berechnungen oder orientierende Versuche ermittelt werden, wobei dann auch die Effizienz der Reinigung geprüft werden kann. Grundsätzlich ist es auch denkbar, verstellbare Düsen vorzusehen, um das Sprühbild zu optimieren und/oder auf Anpassungen der Behälterbehandlungsanlage an sich reagieren zu können.

Grundsätzlich kann auch die Beaufschlagung der zumindest einen Sprüheinrichtung mit der Reinigungsflüssigkeit variiert werden. Beispielsweise können unterschiedliche Sprühdrücke, Druckstöße oder dergleichen bereitgestellt werden.

Unabhängig davon, ob optional direkt mit der Reinigungsflüssigkeit oder in einem separaten Schritt eine Sterilisation erfolgt, ist zumindest nach einem Reinigungsschritt auch ein Spülen mit klarem Wasser zweckmäßig, um Reste der Reinigungsflüssigkeit zu entfernen. Das Wasser kann dabei gegebenenfalls auch speziell gereinigt und insbesondere entkeimt sein, um insgesamt die Reinigungswirkung zu optimieren und eine erneute Kontaminierung zu vermeiden oder zu verlangsamen.

Die im Rahmen der Erfindung optional vorgesehene zumindest eine zweite Sprüheinrichtung kann grundsätzlich direkt an der Umhausung angeordnet sein, um von dort nach innen in Richtung der Behandlungsstation und der Traganordnung sprühen zu können.

Gemäß einer alternativen Ausgestaltung ist jedoch vorgesehen, dass die zumindest eine zweite Sprüheinrichtung oder zumindest eine von mehreren zweiten Sprüheinrichtungen innerhalb des Gehäuses in einem Abstand zu der Umhausung einerseits und zu den Behandlungsstationen andererseits angeordnet ist. Die zweite Sprüheinrichtung oder zumindest eine zweite Sprüheinrichtung ist dann beispielsweise nach Art einer Säule angeordnet und kann dabei direkt auf der Bodenfläche abgestützt sein. Es ergibt sich dann der Vorteil, dass zumindest eine zweite Sprüheinrichtung nahe an den Behälterbehandlungsstationen angeordnet ist, sodass dann auch direkt durch den Wasserdruck eine gewisse mechanische Reinigung erfolgen kann, die das Einwirken der Reinigungsflüssigkeit weiter unterstützen kann.

Gemäß einer bevorzugten Ausgestaltung der Erfindung handelt es sich bei der Behälterbehandlungsanlage um eine Form-Füll-Maschine, bei der in einem integrierten Arbeitsschritt die Behälter aus Vorformlingen mit dem Füllmedium als Umformfluid ausgeformt werden. Die Behälterbehandlungsstationen sind dann für ein kombiniertes Füllen und Formen von Kunststoffflaschen eingerichtet, wobei gerade bei einem solchen Prozess auch Reste des Füllgutes austreten können, die dann mit der Reinigung entfernt werden sollen.

Die Kunststoffflaschen sind gemäß einer bevorzugten Ausgestaltung aus PET gebildet.

Aus der Praxis sind Füll-Form-Maschinen bekannt, bei denen die Behälterbehandlungsstationen beweglich an der Traganordnung gehalten sind.

So ist es bekannt, bei den Behälterbehandlungsstationen einen unteren Bereich nach außen zu kippen, um bei den auftretenden Fliehkräften während der Befüllung und Ausformung möglichst gleichmäßige Eigenschaften hinsichtlich der Verteilung der Flüssigkeit und der Krafteinwirkung zu erreichen.

Bei der erfindungsgemäß vorgesehenen Reinigung ist es vorzugsweise vorgesehen, dass die Behälterbehandlungsstationen geöffnet sind oder zumindest bei einem Teil des Reinigungsvorgangs geöffnet sind, damit auch ein innerer Bereich der Form gereinigt werden kann. Wenn die Behälterbehandlungsstationen beweglich an der Traganordnung gehalten ist, kann gegebenenfalls auch diesbezüglich die Position variiert werden, um eine möglichst vollständige Reinigung erreichen zu können.

Gegenstand der Erfindung ist auch ein Verfahren zum Betrieb der zuvor beschriebenen Behälterbehandlungsanlage. Dabei werden in einem Form-Füll-Betrieb Vorformlinge, insbesondere aus PET, zu den Behälterbehandlungsstationen zugeführt und darin mit einem Füllgut als Fluid zu Kunststoffflaschen umgeformt. Die ausgeformten, befüllten Kunststoffflaschen werden aus den Behälterbehandlungsstationen entnommen, wobei in einem von dem Form-Füll-Betrieb separaten Reinigungsbetrieb mit der zumindest einen ersten Sprüheinrichtung und bei einem Antrieb der Traganordnung eine Reinigung der Innenseite der Umhausung erfolgt.

Wie auch zuvor beschrieben, werden die Behälterbehandlungsstationen vorzugsweise durch den Antrieb der Traganordnung auch an der zumindest einen zweiten Sprüheinrichtung vorbeigeführt, wobei die Traganordnung im Vergleich zu dem Form-Füll-Betrieb bei einer langsameren Geschwindigkeit angetrieben werden kann.

Grundsätzlich ist es auch denkbar, den Antrieb der Traganordnung zu modellieren, beispielsweise um eine größere Einwirkdauer der zumindest einen zweiten Sprüheinrichtung auf die Behälterbehandlungsstation zu erreichen. Beispielsweise kann die Geschwindigkeit weiter abgesenkt werden, wenn jeweils eine Behälterbehandlungsstation an der zumindest einen zweiten Sprüheinrichtung vorbeigeführt wird. In vielen Fällen wird aber eine kontinuierliche Bewegung der Traganordnung zweckmäßig sein, um insgesamt eine zufriedenstellende Reinigungsleistung bei einer einfachen Verfahrensführung zu erreichen.

Üblicherweise ist vorgesehen, dass die Übergabe der Vorformlinge sowie der ausgeformten, befüllten Flaschen bei dem Form-Füll-Betrieb an einen Übergabeabschnitt bei geöffneten Behälterbehandlungsstationen erfolgt.

Bei einer Ausgestaltung der Traganordnung als Karussell kann eine Übergabe beispielsweise von und zu angrenzenden Rädern erfolgen. Entsprechend ist an dem Übergabeabschnitt vergleichsweise wenig Platz, um dort die zumindest eine zweite Sprüheinrichtung anzuordnen.

Vor diesem Hintergrund ist gemäß einer bevorzugten Ausgestaltung der Erfindung vorgesehen, dass die Behälterbehandlungsstationen bei dem Reinigungsbetrieb außerhalb des Übergabeabschnitts an der zumindest einen zweiten Sprüheinrichtung vorbeigeführt werden. Vorzugsweise sind die Behälterbehandlungsstationen dabei geöffnet. Hierzu kann bei einer entsprechenden Steuerung der Öffnungs-Bewegung auch eine Umstellung erfolgen. Bei einer Kurvensteuerung kann beispielsweise eine Auskupplung oder die Führung durch eine alternative Kurvenbahn vorgesehen sein.

Wie bereits zuvor im Detail erläutert, ist im Rahmen der Erfindung zumindest ein Reinigungsbetrieb mit einer Reinigungsflüssigkeit vorgesehen. In zumindest einem weiteren Schritt kann dann eine Sterilisation und/oder ein Spülen vorgesehen sein.

Schließlich ist es im Rahmen der Erfindung auch möglich, zum Abschluss des Reinigungsbetriebes eine Trocknung, insbesondere durch Luftzirkulation, vorzusehen. So kann die Behälterbehandlungsanlage beispielsweise auch Einrichtungen zur Luftzirkulation und/oder Temperierung aufweisen, die dann auch für die Trocknung eingesetzt werden können. Zugeführte bzw. zirkulierte Luft kann dabei gereinigt, getrocknet, temperiert, insbesondere erwärmt, oder in sonstiger Weise aufbereitet werden.

Bei einer bevorzugten Ausgestaltung der Erfindung erfolgt eine insgesamt großflächige Reinigung der Innenseite der Umhausung, wobei die Umhausung beispielsweise eine Höhe zwischen 1,5 m und 4 m aufweisen kann. Ein mittlerer Durchmesser der Umhausung kann beispielsweise in einem Bereich zwischen 2,5 m und 10 m liegen.

Die Erfindung wird nachfolgend exemplarisch anhand von Figuren erläutert. Es zeigen:
- Fig. 1: eine schematische Draufsicht auf eine Behälterbehandlungsanlage in einem Produktionsbetrieb,
- Fig. 2: die Behälterbehandlungsanlage gemäß der Fig. 1 bei einem Reinigungsbetrieb,
- Fig. 3: die Anlage gemäß der Figuren 1 und 2 in einer Seitenansicht,
- Fig. 4: die zuvor beschriebene Anlage in einer perspektivischen Ansicht,
- Figuren 5a bis 5d: alternative Ausgestaltungen einer Sprüheinrichtung der Behälterbehandlungsanlage.

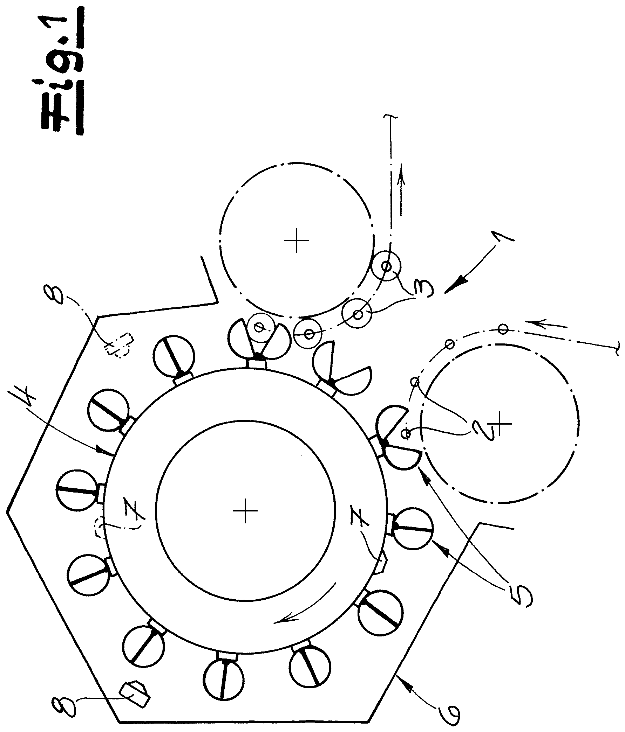

Die Fig. 1 zeigt in einer Draufsicht eine Behälterbehandlungsanlage. Im dargestellten Ausführungsbeispiel handelt es sich um eine Form-Füll-Maschine, wobei an einem Übergabeabschnitt 1 Vorformlinge 2 aus PET (Polyethylenterephthalat) zugeführt und ausgeformte, befüllte Kunststoffflaschen 3 abgeführt werden.

Die Form-Füll-Maschine umfasst ein Karussell als Traganordnung 4, wobei an der Traganordnung 4 mehrere Behälterbehandlungsstationen 5 angeordnet sind.

An dem Übergabeabschnitt 1 sind die Behälterbehandlungsstationen 5 geöffnet, um einerseits die Vorformlinge 2 einzuführen und andererseits die ausgeformte, befüllte Kunststoffflaschen 3 entnehmen zu können.

Nach der Aufnahme der Vorformlinge 2 werden die Behälterbehandlungsstationen 5 geschlossen, wobei dann in einem Form-Füll-Betrieb die Vorformlinge 2 mit einem Füllgut als Fluid zu den Kunststoffflaschen 3 umgeformt werden. Dabei ist nicht vollständig zu vermeiden, dass Reste des Füllgutes heruntertropfen und/oder durch die Rotation der Traganordnung 4 auch weiter verteilt werden. Bei dem Füllgut kann es sich insbesondere um ein Getränk handeln. Als Füllgut kommen aber auch Reinigungsmittel, flüssige oder pastöse Lebensmittel, Kosmetikprodukte oder dergleichen in Betracht.

Die Form-Füll-Maschine umfasst in diesem Zusammenhang eine Umhausung 6, welche die Traganordnung 4 mit den daran angeordneten Behälterbehandlungsstationen 5 aufnimmt.

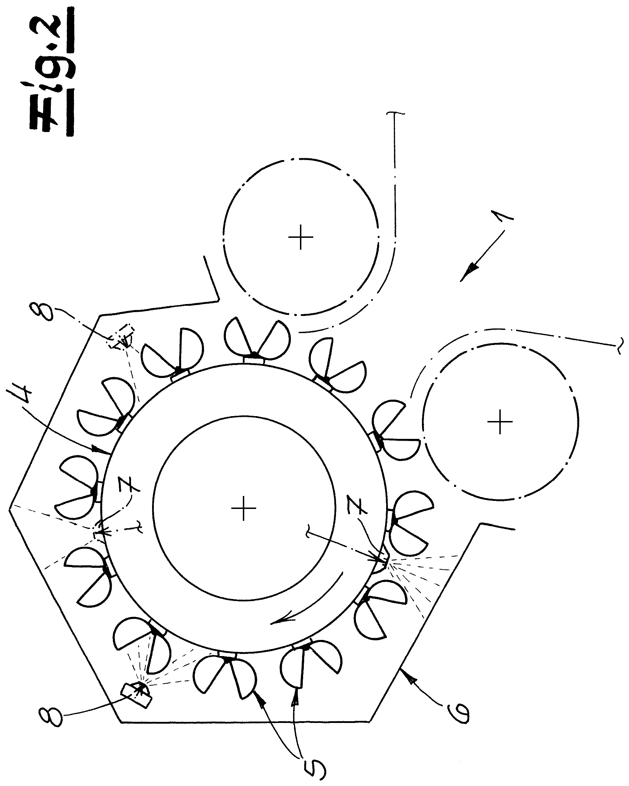

Die Fig. 2 zeigt die Form-Füll-Maschine in einem Reinigungsbetrieb, wobei entsprechend keine Vorformlinge 2 zugeführt werden. Vielmehr verbleiben die Behälterbehandlungsstationen 5 bei ihrem Umlauf während der Bewegung der Traganordnung 4 im geöffneten Zustand. An der Traganordnung 4 in Form des Karussells ist zumindest eine erste Sprüheinrichtung 7 angeordnet, welche in dem dargestellten Reinigungsbetrieb eine Reinigungsflüssigkeit auf eine Innenseite der Umhausung 6 sprüht, die dadurch gereinigt wird. Da die Traganordnung 4 auch in dem Reinigungsbetrieb gedreht wird, kann mit einer einzigen ersten Sprüheinrichtung 7 um den gesamten Innenumfang der Umhausung 6 eine Reinigung erfolgen.

**In** der Fig. 1 und der Fig. 2 ist in diesem Zusammenhang strichpunktiert dargestellt, dass gemäß einer optionalen Ausgestaltung auch zwei oder mehr erste Sprüheinrichtungen 7 vorgesehen sein können, um eine schnellere oder vollständigere Reinigung zu ermöglichen.

Wie auch nachfolgend weiter erläutert, können mehrere erste Sprüheinrichtungen 7 auch unterschiedlich zueinander ausgestaltet sein und/oder auch in einer unterschiedlichen Höhe angeordnet werden, um dann auch unterschiedliche Höhenabschnitte der Umhausung 6 an ihrer Innenseite zu reinigen.

Des Weiteren ist zumindest eine zweite Sprüheinrichtung 8 vorgesehen, die innerhalb der Umhausung 6 zur Reinigung der daran vorbeibewegten Behälterbehandlungsstationen 5 sowie der Traganordnung 4 angeordnet ist. Die zumindest eine zweite Sprüheinrichtung 8 kann dabei freistehend, beispielsweise als eine Art Säule, angeordnet sein, um möglichst nahe an die jeweils vorbeigeführten Behälterbehandlungsstationen 5 heranzureichen. Es ist dann auch möglich, zu einem größeren Anteil auch eine mechanische Reinigung durch die Sprühwirkung zu erreichen, um die Wirkung der Reinigungsflüssigkeit zu unterstützen.

Die Reinigungsflüssigkeit kann in bekannter Weise Tenside, Lösemittel und Enzyme enthalten, um Verunreinigungen lösen bzw. abspülen zu können.

Grundsätzlich soll die Reinigungsflüssigkeit auch eine sterilisierende Wirkung haben, wobei eine Sterilisation auch in einem separaten Verfahrensschritt, insbesondere auch unter Nutzung der ersten Sprüheinrichtung 7 sowie der zweiten Sprüheinrichtung 8, durchgeführt werden kann.

Schließlich kann mit der zumindest einen ersten Sprüheinrichtung 7 und der zumindest einen zweiten Sprüheinrichtung 8 auch ein abschließendes Spülen mit Wasser erfolgen, wobei das Wasser dazu auch gefiltert, entkeimt oder in sonstiger Weise aufbereitet sein kann.

Auch hinsichtlich der zweiten Sprüheinrichtung 8 ist es möglich, mehrere davon vorzusehen, was ebenfalls durch eine strichpunktierte Darstellung in Fig. 1 sowie Fig. 2 angedeutet ist.

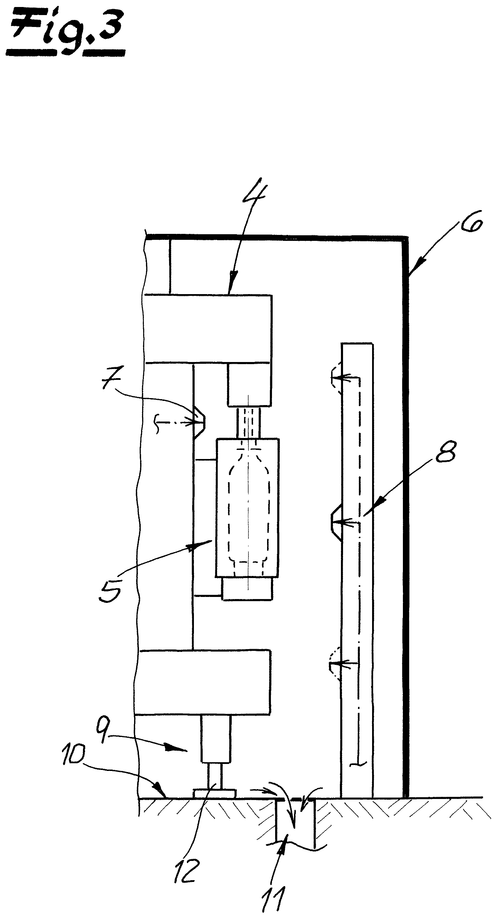

Die Fig. 3 zeigt stark schematisiert eine Seitenansicht der Behälterbehandlungsanlage, wobei hier zu erkennen ist, dass die Umhausung 6 die gesamte Traganordnung 4 mit den daran angeordneten Behälterbehandlungsstationen 5 aufnimmt.

Die Traganordnung 4 weist einen Fußabschnitt 9 auf, der auf einer Bodenfläche 10 abgestützt ist. Die Umhausung 6 erstreckt sich in Richtung der Bodenfläche 10 zumindest bis zu der Höhe des Fußabschnitts 9.

In der konkret dargestellten Ausführungsform erstreckt sich die Umhausung 6 unmittelbar zur Bodenfläche 10, sodass dann eine Reinigung der Innenseite der Umhausung 6 (vgl. Fig. 2) bis auf die Bodenfläche 10 selbst möglich ist.

Letztlich wird auch die Bodenfläche 10 gereinigt, wobei dort schematisch ein Bodenablauf 11 dargestellt ist, durch den die verschmutzte Reinigungsflüssigkeit abgeführt wird.

Grundsätzlich ist es auch denkbar, die Reinigungsflüssigkeit mit oder ohne Aufbereitung auch zumindest in einem gewissen Maße in einem Kreislauf zu führen, um insgesamt eine ressourcenschonende Handhabung zu erreichen.

Ohne eine Aufbereitung würden sich dann die Verschmutzungen zunächst in der Reinigungsflüssigkeit ansammeln, bevor diese dann abschließend abgeführt wird.

Die Darstellung der ersten Sprüheinrichtung 7 und der zweiten Sprüheinrichtung 8 in der Fig. 3 ist nur schematisch. Es ist aber zu erkennen, dass ein vergleichsweise großer Bereich gereinigt werden soll, sodass dann die Sprüheinrichtungen 7, 8 in geeigneter Weise angepasst werden können, worauf nachfolgend noch weiter eingegangen wird.

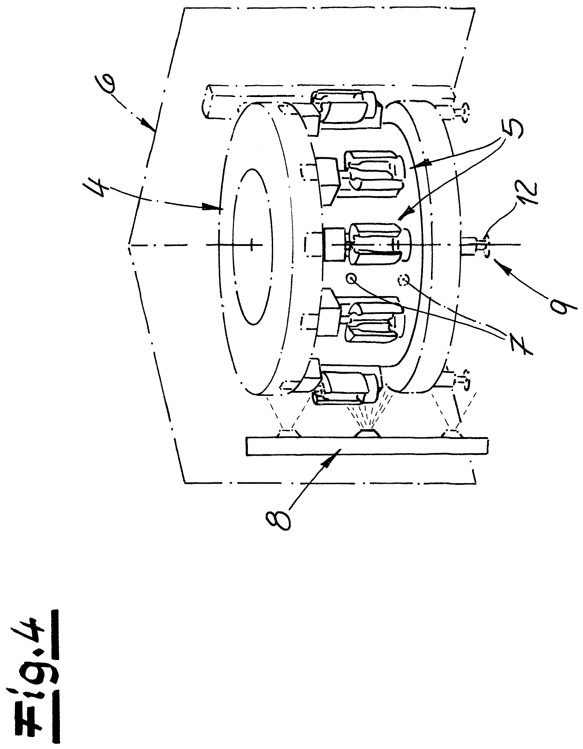

Die Fig. 4 zeigt die Behälterbehandlungsanlage in Form einer Füll-FormMaschine in einer perspektivischen Ansicht, In dem Fußabschnitt 9 können beispielsweise mehrere Füße 12 vorgesehen sein, wobei eine Reinigung bis zu den Füßen 12 erfolgen kann. Grundsätzlich ist es aber auch denkbar, im Bereich des Fußabschnitts 9, beispielsweise auf Höhe der Füße 12, eine Auffangwanne oder dergleichen anzuordnen, welche sich in einem gewissen Maße oberhalb des Niveaus der Bodenfläche 10 befindet.

Wesentlich ist im Rahmen der Erfindung jedoch, dass auch mit der zumindest einen zweiten Spannrichtung 8 wesentliche Bereiche oberhalb sowie unterhalb der Behälterbehandlungsstationen 5 gereinigt werden, welche auch bei dem Form-Füll-Betrieb verschmutzen können.

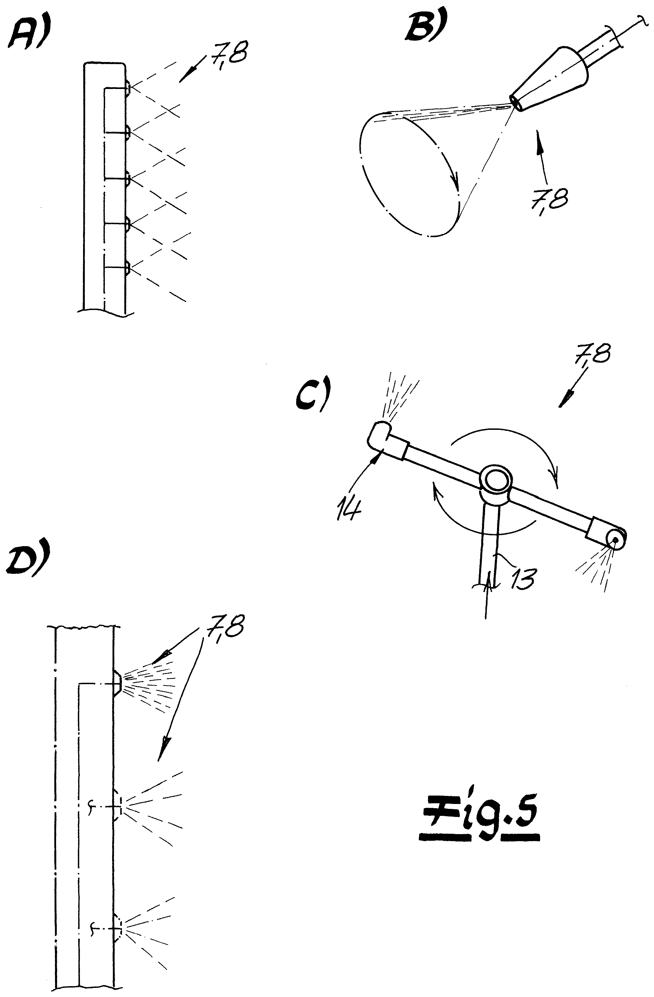

Die Figuren 5a bis 5d zeigen rein exemplarisch mögliche Ausgestaltungen der Sprüheinrichtungen 7, 8. Die Sprüheinrichtungen 7, 8 können beispielsweise jeweils mehrere Austrittsöffnungen aufweisen, um einen Düsenbaum oder Fächerstrahl auszubilden (siehe Fig. 5a).

Gemäß der Fig. 5b ist angedeutet, dass ein mit der Sprüheinrichtung 7, 8 erzeugter Wasserstrahl auch selbst rotierend sein kann, um eine gleichmäßige Wasserverteilung sowie eine Art fräsende Wirkung zu erreichen.

Gemäß der Fig. 5c ist dargestellt, dass die Sprüheinrichtung 7, 8 einen Zuführleitung 13 sowie eine gegenüber der Zuführleitung 13 bewegliche Düsenanordnung 14 aufweist.

In der Fig. 5d ist schließlich angedeutet, dass mehrere Sprüheinrichtungen 7, 8 an der Traganordnung 4 und/oder um den Umfang der Umhausung 6 in unterschiedlicher Höhe angeordnet sein können, um unterschiedliche Höhenbereiche abdecken zu können.

Die beschriebenen Varianten sind lediglich exemplarisch und können insbesondere auch miteinander kombiniert sein.

### Bezugszeichenliste

- 1: Übergabeabschnitt
- 2: Vorformling
- 3: Kunststoffflasche
- 4: Traganordnung
- 5: Behälterbehandlungsstationen
- 6: Umhausung
- 7: erste Sprüheinrichtung
- 8: zweite Sprüheinrichtung
- 9: Fußabschnitt
- 10: Bodenfläche
- 11: Bodenablauf
- 12: Füße
- 13: Zuführleitung
- 14: Düsenanordnung

## Patentansprüche

1. Behälterbehandlungsanlage, insbesondere Fluidumformmaschine zur Bildung von Kunststoffflaschen (3), mit einer Vielzahl von Behälterbehandlungsstationen (5), mit einer umlaufend antreibbaren Traganordnung (4), an der die Behälterbehandlungsstationen (5) gehalten sind und welche mit einem Fußabschnitt (9) auf einer Bodenfläche (10) abgestützt ist, und mit einer sich in Richtung der Bodenfläche (10) zumindest bis zu der Höhe des Fußabschnitts (9) erstreckenden Umhausung (6), welche die Traganordnung (4) mit den daran gehaltenen Behandlungsstationen (5) aufnimmt, **dadurch gekennzeichnet, dass** zumindest eine erste Sprüheinrichtung (7) zum Austrag einer Reinigungsflüssigkeit mit der Traganordnung (4) umlaufend bewegbar zur Reinigung einer Innenseite der Umhausung (6) angeordnet ist.

2. Behälterbehandlungsanlage nach Anspruch 1, **dadurch gekennzeichnet, dass** diese dazu eingerichtet ist, die Reinigungsflüssigkeit bodenseitig zu sammeln und/oder abzuführen.

3. Behälterbehandlungsanlage nach einem der vorhergehenden Ansprüche, **dadurch gekennzeichnet, dass** innerhalb der Umhausung (6) zumindest eine zweite Sprüheinrichtung (8) zur Reinigung der daran vorbeibewegbaren Behälterbehandlungsstationen (5) und der Traganordnung (4) bis zu ihrem Fußabschnitt (9) vorgesehen ist.

4. Behälterbehandlungsanlage nach einem der vorhergehenden Ansprüche, **dadurch gekennzeichnet, dass** die Traganordnung (4) als Karussell mit einer vertikalen Rotationsachse ausgestaltet ist.

5. Behälterbehandlungsanlage nach einem der vorhergehenden Ansprüche, **dadurch gekennzeichnet, dass** die zumindest eine erste oder zweite Sprüheinrichtung (7, 8) eine Zuführleitung (13) und eine gegenüber der Zuführleitung (13) bewegliche Düsenanordnung (14) aufweist.

6. Behälterbehandlungseinrichtung nach einem der vorhergehenden Ansprüche, **dadurch gekennzeichnet, dass** die zumindest eine erste oder zweite Sprüheinrichtung (7, 8) mehrere voneinander beabstandete Austrittsöffnungen aufweist.

7. Behälterbehandlungsanlage nach einem der vorhergehenden Ansprüche, **dadurch gekennzeichnet, dass** die Bodenfläche (10) einen Bodenablauf (11) aufweist und/oder einer Auffangwanne aufnimmt.

8. Behälterbehandlungsanlage nach einem der vorhergehenden Ansprüche, **dadurch gekennzeichnet, dass** die zumindest eine zweite Sprüheinrichtung (8) innerhalb der Umhausung (6) in einem Abstand zu der Umhausung (6) einerseits und zu den Behälterbehandlungsstationen (5) andererseits angeordnet ist.

9. Behälterbehandlungsanlage nach einem der vorhergehenden Ansprüche, **dadurch gekennzeichnet, dass** die Behälterbehandlungsstationen (5) für ein kombiniertes Füllen und Formen von Kunststoffflaschen (3) eingerichtet sind.

10. Behälterbehandlungsanlage nach einem der vorhergehenden Ansprüche, **dadurch gekennzeichnet, dass** die Behälterbehandlungsstationen (5) beweglich an der Traganordnung (4) gehalten sind.

11. Verfahren zum Betrieb einer Behälterbehandlungsanlage nach einem der vorhergehenden Ansprüche, wobei in einem Form-Füll-Betrieb Vorformlinge (2) zur den Behälterbehandlungsstationen (5) zugeführt und darin mit einem Füllgut als Fluid zu Kunststoffflaschen (3) umgeformt werden und die ausgeformten, befüllten Kunststoffflaschen (3) aus den Behälterbehandlungsstationen (5) entnommen werden und wobei in einem von dem Form-Füll-Betrieb separaten Reinigungsbetrieb mit der zumindest einen ersten Sprüheinrichtung (7) und bei einem Antrieb der Traganordnung (4) eine Reinigung der Innenseite der Umhausung (6) erfolgt.

12. Verfahren nach Anspruch 11, wobei in dem Reinigungsbetrieb die Behälterbehandlungsstationen (5) durch den Antrieb der Traganordnung (4) an der zumindest einen zweiten Sprüheinrichtung (8) vorbeigeführt werden.

13. Verfahren nach Anspruch 12, wobei die Übergabe der Vorformlinge (2) sowie der ausgeformten, befüllten Kunststoffflaschen (3) bei dem Form-Füll-Betrieb an einem Übergabeabschnitt (1) bei geöffneten Behälterbehandlungsstationen (5) erfolgt und wobei die Behälterbehandlungsstationen (5) bei dem Reinigungsbetrieb in einem geöffneten Zustand außerhalb des Übergabeabschnitts (1) an der zumindest einen zweiten Sprüheinrichtung (8) vorbeigeführt werden.

14. Verfahren nach einem der Ansprüche 11 bis 13, wobei während des Reinigungsbetriebs in einem ersten Schritt eine Reinigung mit einer Reinigungsflüssigkeit und in zumindest einem weiteren Schritt eine Sterilisation und/oder eine Spülen erfolgt bzw. erfolgen.

15. Verfahren nach einem der Ansprüche 11 bis 14, wobei zum Abschluss des Reinigungsbetriebs eine Trocknung, insbesondere durch Luftzirkulation, erfolgt.
